# EUROPÄISCHE PATENTSCHRIFT

(11) **EP 1 619 094 B1**
(45) Veröffentlichungstag und Bekanntmachung des Hinweises auf die Patenterteilung: **04.04.2007**
(21) Anmeldenummer: 05012939.4
(22) Anmeldetag: 16.06.2005
(51) Int. Cl.: B60R 25/04

(54) **Elektronische Wegfahrsperre**
Electronic immobiliser
Dispositif anti-vol éléctronique

(30) Priorität: 20.07.2004 DE 102004035033
(43) Veröffentlichungstag der Anmeldung: 25.01.2006
(73) Patentinhaber: WABCO GmbH, 30453 Hannover (DE)
(72) Erfinder: Paulmann, Mark-Holger, 30419 Hannover (DE); Pietsch, Frank, 30952 Ronnenberg (DE)
(74) Vertreter: Schrödter, Manfred

(56) Entgegenhaltungen:
- WO-A-98/26962

## Beschreibung

Die Erfindung betrifft eine elektronische Wegfahrsperre für Fahrzeuge gemäß Oberbegriff des Anspruchs 1.

Durch die EP 0 830 273 B1 ist eine Wegfahrsperre mit einem Motorsteuergerät und damit zusammenwirkenden Eingabemitteln zur Eingabe eines Zugangsberechtigungscodes bekannt, die nur betriebsbereit ist, wenn das Motorsteuergerät einen den Benutzer legitimierenden Zugangsberechtigungscode erhalten hat. Das Motorsteuergerät ist über eine Signalleitung mit einem Sicherungssteuergerät verbunden und verfügt über Mittel zur Abgabe eines vorbestimmten Rufsignals auf die Signalleitung, um vom Sicherungssteuergerät die Zusendung eines Freigabecodes anzufordern. Das Sicherungssteuergerät verfügt über Mittel zum Vergleich eines vom Motorsteuergerät erhaltenen codierten Rufsignals mit einem im Sicherungssteuergerät vorhandenen Referenzsignal sowie zur Abgabe des Freigabecodes an das Motorsteuergerät bei Übereinstimmung. Das Motorsteuergerät besitzt Speichermittel, in die es einen Freigabecode als Referenzcode einschreiben kann und weist ferner eine Prüfeinrichtung auf, die bei Erhalt eines Freigabecodes prüft, ob in den Speichermitteln ein Referenzcode vorhanden ist, und die den Freigabecode als Referenzcode in die Speichermittel übernimmt, wenn darin ein Referenzcode nicht vorhanden ist. Das Motorsteuergerät setzt sich betriebsbereit, wenn in den Speichermitteln ein gültiger Referenzcode vorhanden ist und der Freigabecode damit übereinstimmt. Die wesentlichen Merkmale dieser bekannten Wegfahrsperre bestehen also darin, dass das Motorsteuergerät nur betriebsbereit ist, wenn es vom Sicherungsschutzgerät ein Referenzsignal erhalten hat, das zuvor vom Sicherungsschutzgerät festgelegt wurde.

Die DE 42 01 568 C2 offenbart ein Verfahren zur Synchronisation eines Systems zur Erzeugung und drahtlosen Übertragung und zum Empfang von verschlüsselten Funktionsbefehlen, das im Wesentlichen aus einem Schlüssel mit Sender und einem Schloss mit Empfänger besteht. Es wird ein Telegramm erzeugt und übertragen, das außer dem eigentlichen Funktionsbefehl noch Festcode- und Wechselcode-Daten enthält, wobei die Wechselcode-Daten, ausgehend von übereinstimmenden Daten, mittels der Pseudo-Zufallsgeneratoren im Sender und Empfänger nach dem gleichen Schema verändert werden, und jeweils nur ein bestimmter Bruchteil der Wechselcode-Daten übertragen wird. In den Schlüsselrohling wird ein fertiger Sender eingesetzt und durch Eingabe von Kenndaten elektronisch individualisiert. Der Schlüsselrohling ist einem Schlossrohling zugeordnet. Beide Teile werden zueinander passend mechanisch individualisiert sowie für Transport- und Montagezwecke unverlierbar miteinander verbunden. Ein fertiger Empfänger und ein mechanisch individualisiertes Schloss werden bestimmungsgemäß eingebaut, wobei der mit dem Schloss eingebaute Empfänger durch den Sender des zugehörigen Schlüssels individualisiert und gleichzeitig mit dem Sender synchronisiert wird, indem die Kenndaten des Senders auf den Empfänger übertragen werden. Die Übertragung der Kenndaten vom Sender auf den Empfänger wird in einer speziellen, Unbefugten nicht zugänglichen Betriebsart des Empfängers durchgeführt. Ein wesentliches Merkmal des bekannten Verfahrens besteht also darin, die Kenndaten bei der Schlüsselherstellung in den Schlüssel einzuschreiben und beim Einlernen des Systems in den Empfänger zu übertragen. Die Kenndaten verbleibem im Schlüssel. Nachteilig ist, dass ein Krypto-Transponder benötigt wird, der seine Daten verschlüsselt ausgibt, damit die Kenndaten nicht direkt durch Auslesen des Schlüsselinhaltes kopiert werden können. Das Auslesen des Krypto-Transponders kann nicht verändert werden und so ist bereits eine verschlüsselte Kennung auslesbar. Kostengünstige Transponder, die nur über eine wechselseitige Authentisierung zur Identifikation des Schlüssel-Schlosses verfügen und keine Datenverschlüsselung aufweisen, können nicht eingesetzt werden.

Dokument WO 98/26962 offenbart ebenfalls ein ähnliches System.

Die Aufgabe der vorliegenden Erfindung besteht darin, eine elektronische Wegfahrsperre der eingangs genannten Art so auszubilden, dass mit relativ geringem Aufwand eine verbesserte Sicherheit erreicht wird.

Diese Aufgabe wird durch die Erfindung gemäß Anspruch 1 gelöst.

Vorteilhafte und zweckmäßige Weiterbildungen der Aufgabenlösung sind in den Unteransprüchen angegeben.

Die erfindungsgemäße Wegfahrsperre für Fahrzeuge weist ein Sicherheitssteuergerät und ein Motorsteuergerät für fahrzeugrelevante Funktionen auf, mit dem das Sicherheitssteuergerät über eine Signalleitung verbunden ist, wobei das Sicherheitssteuergerät und das Motorsteuergerät Speicher aufweisen, in denen jeweils mehrere verschiedene, gemeinsam bekannte Verschlüsselungsalgorithmen abgelegt sind, die verschiedenen fahrzeugrelevanten Funktionen und/oder Befehlen/Informationen zugeordnet sind. Das Sicherheitssteuergerät sendet nach einer Authentisierung bzw. Identifikation des Fahrers gegenüber dem Sicherheitssteuergerät und nach Übermittlung eines Fahrerstartwunsches ein Anforderungssignal an das Motorsteuergerät, welches eine Zufallszahl generiert und auf das Sicherheitssteuergerät überträgt. Das Sicherheitssteuergerät wählt in Abhängigkeit von der zu übertragenden Information bzw. dem zu übertragenden Befehl einen der der Information bzw. dem Befehl zugeordneten vorbestimmbaren Verschlüsselungsalgorithmen aus und verschlüsselt die Zufallszahl mit diesem Verschlüsselungsalgorithmus. Die verschlüsselte Zufallszahl wird als verschlüsselte Antwortzahl an das Motorsteuergerät zurückgesendet. Das Motorsteuergerät verschlüsselt seinerseits die von ihm an das Sicherheitssteuergerät gesendete Zufallszahl mit sämtlichen abgespeicherten Verschlüsselungsalgorithmen zur Erzeugung von Testzahlen. Die Testzahlen werden mit der Antwortzahl des Sicherheitssteuergerätes verglichen. Bei Feststellung einer Übereinstimmung zwischen einer Testzahl und der Antwortzahl wird der der Antwortzahl und der Testzahl zu Grunde liegende Verschlüsselungsalgorithmus und die/der dem Verschlüsselungsalgorithmus zugeordnete Information/Befehl ermittelt und die dem Verschlüsselungsalgorithmus zugeordnete Funktion (bspw. Kraftstoffversorgung, Zündstromkreis, Anlasserstromkreis) durch das Motorsteuergerät freigeschaltet.

Bei der erfindungsgemäßen Wegfahrsperre wird ein spezielles modifiziertes Challenge-Response-Verfahren zur verschlüsselten Übertragung von Befehlen/Informationen bzw. zur Authentisierung der jeweiligen Steuergeräte benutzt. Es wird auf die Übertragung verschlüsselter Codes (der im Stand der Technik erläuterte Freigabecode) verzichtet.

Beim herkömmlichen Challenge-Response-Verfahren wird von einem Empfänger bei einem Sender eine Zufallszahl angefragt und vom Sender auf den Empfänger übertragen, welcher die Zufallszahl mit einem gemeinsam bekannten Schlüssel verschlüsselt und als verschlüsselte Antwort zum Sender zurücksendet. Der ursprüngliche Sender verschlüsselt seine gesendete Zufallszahl ebenfalls mit dem ihm bekannten Schlüssel und vergleicht sein Ergebnis mit der erhaltenen Antwort. Da der Empfänger und der Sender die gleiche Verschlüsselungsvorschrift verwenden, kann so die Antwort auf Richtigkeit geprüft werden. Stimmen beide überein, ist der Empfänger authentifiziert. Zusätzliche Befehle können nur in Klartext, d. h. unverschlüsselt übertragen werden. Bei Anwendung bei einer Wegfahrsperre gemäß vorliegender Art stellt das Sicherheitssteuergerät den Empfänger und das Motorsteuergerät den Sender dar. Wenn neben der Authentisierung des Sicherheitssteuergerätes ein zusätzlicher Befehl übertragen werden soll, bspw. ein Befehl zur Freigabe der Kraftstoffzufuhr, so kann dies bisher nur im Klartext unverschlüsselt erfolgen. Die Kraftstoffzufuhr stellt in diesem Falle die zu sichernde Funktion dar, über die das Motorsteuergerät die Kontrolle hat. Der Nachteil besteht bei Anwendung des herkömmlichen Challenge-Response-Verfahrens darin, dass beim Abhören des Kommunikationskanales (bspw. serielle CAN-Verbindung oder Funkverbindung) zwischen Sicherheitssteuergerät und Motorsteuergerät erkannt werden kann, welcher Befehl gerade benutzt wird, bspw. die erwähnte Kraftstoff-Freigabe, ein Schlüsseleinlernvorgang oder eine andere Funktion - auch wenn der Vorgang der Befehlsübertragung als solcher dadurch sicherer wird, dass die zu verifizierende Zufallszahl immer eine andere ist für jeden Freigabevorgang.

Bei der erfindungsgemäßen Wegfahrsperre wird nicht nur die Zusatzzahl für die Authentisierung des Sicherheitssteuergerätes gegenüber dem Motorsteuergerät sondern auch eine zusätzliche Information bzw. ein zusätzlicher Befehl verschlüsselt übertragen. Die Zufallszahl kann dabei je nach zu übertragender Information bzw. zu übertragendem Befehl vom Sicherheitssteuergerät mit verschiedenen Verschlüsselungsalgorithmen verschlüsselt werden, die auch dem Motorsteuergerät bekannt sind und die verschiedenen, vorbestimmbaren, fahrzeugrelevanten Funktionen zugeordnet sind, über die das Motorsteuergerät die Kontrolle hat. Die Algorithmen sind dabei so aufeinander abgestimmt, dass sie keine gleichen verschlüsselten Zufallszahlen bilden.

Beispiel: Dem Sicherheitssteuergerät und dem Motorsteuergerät sind vier verschiedene Verschlüsselungsalgorithmen gemeinsam bekannt, mit denen die Zusatzzahl verschlüsselt werden kann. Von diesen Verschlüsselungsalgorithmen wird bspw. ein erster Befehl "Kraftstoff-Freigeben" durch Verwendung eines Algorithmus A und ein zweiter Befehl "Zündung-Freigeben" durch Verwendung eines Algorithmus B übertragen. Ein dritter Befehl könnte zur Freischaltung des Anlassers und ein vierter Befehl zur unten erläuterten Aktivierung einer Erstinbetriebnahme verwendet werden. Das Motorsteuergerät verschlüsselt mit allen vier Algorithmen die von ihm gesendete Zusatzzahl und vergleicht seine vier Verschlüsselungsergebnisse (Testzahlen) mit der empfangenen Antwortzahl des Sicherheitssteuergerätes und stellt durch Vergleich fest, welcher Algorithmus das passende Ergebnis liefert, d. h. welcher auf die Zufallszahl angewandte Algorithmus eine mit der Antwortzahl übereinstimmende Testzahl bildet. Bei Übereinstimmung einer der Testzahlen mit der Antwortzahl ist zum einen das Sicherheitssteuergerät verifiziert und ist zum anderen auch der dem Algorithmus zugeordnete Befehl als der tatsächlich übertragende Befehl, bspw. "Kraftstoff-Freigeben" verifiziert. Das Motorsteuergerät schaltet dann die Funktion "Kraftstoff-Zufuhr" frei. Im Gegensatz zum bekannten Challenge-Response-Verfahren wird mit der Auswahl eines Verschlüsselungsalgorithmus auch der auszuführende Befehl ausgewählt und gleichzeitig mit der verschlüsselten Zusatzzahl übertragen. Dagegen sind beim bekannten Verfahren zwei Schritte vorgesehen; der eine Schritt besteht in der Übersendung eines Befehles im Klartext und der andere Schritt in der Übersendung der verschlüsselten Zusatzzahl, um den Befehl zu verifizieren. Die Erfindung kombiniert beide Schritte über eine einzige Verschlüsselung der Zusatzzahl, mit der auch gleichzeitig die/der zu übertragende Information/Befehl mitverschlüsselt und gleichzeitig verifiziert wird, dass genau dieser Befehl gemeint ist und richtig übertragen wurde anhand des verwendeten Verschlüsselungsalgorithmus. Der Vorteil der erfindungsgemäßen Verschlüsselung besteht also darin, dass nur noch eine Information vom Sicherheitssteuergerät auf das Motorsteuergerät übertragen wird, der man nicht ansieht, um welchen Befehl es sich handelt, da bei jeder Anfrage durch das Sicherheitssteuergerät eine neue Zusatzzahl vom Motorsteuergerät übertragen wird, die es ermöglicht, dass der Befehl jedes Mal über die verschlüsselte Zusatzzahl mit-übertragen wird. Durch die Verwendung mehrerer verschiedener Verschlüsselungsalgorithmen wird bei der Erfindung die Sicherheit wesentlich erhöht.

Alternativ zu dem oben beschriebenem Verfahren ist es auch möglich, dass das Motorsteuergerät die empfangene Antwortzahl mit Hilfe sämtlicher Verschlüsselungsalgorithmen entschlüsselt und die Entschlüsselungsergebnisse mit der von ihm an das Sicherheitssteuergerät gesendeten Zufallszahl vergleicht und bei Übereinstimmung zwischen einem Entschlüsselungsergebnis und der gesendeten Zufallszahl die dem Verschlüsselungsalgorithmus zugeordnete fahrzeugrelevante Funktion freischaltet.

Einem Verschlüsselungsalgorithmus können auch mehrere Informationen/Befehle oder Freigabefunktionen zugeordnet sein.

Gemäß einer vorteilhaften Weiterbildung der Erfindung werden nach Durchführung einer Freischaltung oder einer bestimmten Zahl von Freischaltvorgängen neue Verschlüsselungsalgorithmen bereit gestellt. Hierdurch wird die Sicherheit weiter erhöht.

Eine weitere Verbesserung der Sicherheit ist gemäß einer anderen Ausgestaltung dadurch erzielbar, dass eine Freischaltung einer Funktion nur dann erfolgt, wenn für mehrere verschiedene Antwortzahlen des Sicherheitssteuergerätes eine Übereinstimmung mit verschiedenen Testzahlen des Motorsteuergerätes festgestellt worden ist.

Eine besondere Ausgestaltung der Erfindung betrifft die Vereinfachung des Initialisierungsvorganges bei einer Erstinbetriebnahme des Fahrzeugs.

Ein grundsätzliches Problem bei der Individualisierung des Sicherheitssteuergerätes und des Motorsteuergerätes besteht darin, dass beide Geräte über eine individuelle Kennung verfügen müssen, damit die Freischaltung von fahrzeugrelevanten Funktionen nicht einfach durch Austausch eines Steuergerätes umgangen werden kann. Die Vergabe einer individuellen Kennung bei der Produktion am Bandende erfordert aufwendige Abstimmungsvorgänge, wenn mehrere Fahrzeuge parallel in Betrieb genommen werden. Gemäß der erfindungsgemäßen Ausgestaltung ist für die Initialisierung der Wegfahrsperre bei einer Erstbetriebnahme eine Einrichtung zur Inbetriebnahme des Fahrzeugs vorgesehen, die Mittel zur Abspeicherung individueller Kenndaten (Freischaltcodes) enthält. Das Sicherheitssteuergerät weist Mittel auf, die bei beabsichtigter Inbetriebnahme des Fahrzeugs die Kenndaten aus dem Speichermittel der Einrichtung auslesen und in einem Speicher des Sicherheitssteuergerätes ablegen. Die Einrichtung kann durch einen Transponder in einem Zündschlüssel oder durch Transponder in mehreren Zündschlüsselsätzen oder durch eine Chipkarte mit Transponder oder andere vergleichbare Bauteile gebildet sein, mit denen die erstmalige Initialisierung für das Sicherheitssteuergerät durchgeführt werden kann. Die Kenndaten werden dabei vor dem Einbau des Zündschlüssels oder der Zündschlüsselsätze zusammen mit einem Zündschloss in ein mit einem Sicherheitssteuergerät und einem Motorsteuergerät ausgestattetes Fahrzeug abgespeichert. Die Kenndaten werden vom Transponder mit Hilfe einer Antenne auf das Sicherheitssteuergerät übertragen. Auf eine Antenne kann verzichtet werden bei Verwendung beispielsweise einer Chipkarte, deren Chip elektronisch kontaktiert werden kann zur direkten Übertragung der Kenndaten oder bei Verwendung eines Zündschlüssels mit EPROM, der elektronisch kontaktiert werden kann zur direkten Übertragung der Kenndaten. Die ausgelesenen Kenndaten werden zur Initialisierung der Kommunikation zwischen Motorsteuergerät und Sicherheitssteuergerät eingesetzt. Der Vorteil besteht darin, dass die Kennung, mit der sich das Sicherheitssteuergerät und das Motorsteuergerät identifizieren, vor Beginn der Montage, bspw. von Zündschlüssel und Zündschloss nicht bekannt ist. Die Zündschlüssel mit Kennung werden zusammen mit dem Zündschloss geliefert. Aber es ist zu diesem Zeitpunkt unbekannt, in welchem Fahrzeug das Zündschloss eingebaut wird; dadurch kann auf die Individualisierung des Motorsteuergerätes und des Sicherheitssteuergerätes am Bandende verzichtet werden. Das Risiko, die Kennung auszulesen, bevor der Zündschlüssel eingelernt worden ist, ist recht gering. Es kann darüber hinaus vorgesehen werden, nur Ersatzzündschlüssel mit vorhandener individueller Kennung einzulernen, um so die Sicherheit des Systems zu erhöhen.

Es wäre auch denkbar einen Irisscanner oder eine Fingerabdruckscanner einzusetzen und die ermittelten biometrischen Daten in dem Motorsteuerraum einzulernen und zur Befehlsübertragung zu nutzen.

Die Erfindung soll nachfolgend anhand der beigefügten Zeichnung anhand eines Ausführungsbeispieles näher erläutert werden.

Es zeigen:
- Fig. 1: ein Blockschaltbild einer elektronischen Wegfahrsperre und
- Fig. 2: ein Ablaufdiagramm zur Veranschaulichung der Arbeitsweise der elektronischen Wegfahrsperre nach Fig. 1.

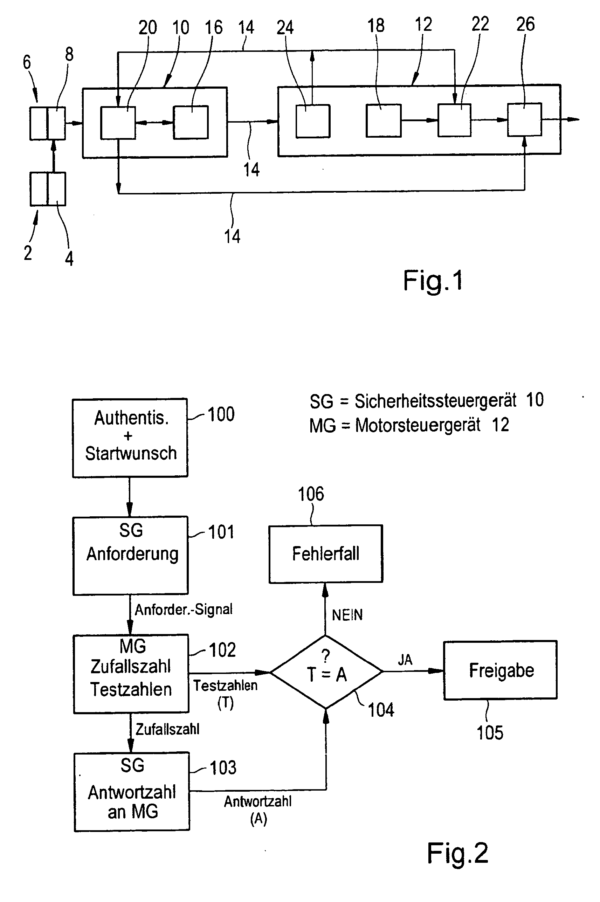

Die Figur 1 zeigt eine elektronische Wegfahrsperre für ein Fahrzeug, welche einen Zündschlüssel 2 mit eingebautem Transponder 4, ein Zündschloss 6, eine Antenne 8, die bspw. am Zündschloss 6 angeordnet sein kann, ein Sicherheitssteuergerät 10 und ein Motorsteuergerät 12 aufweist. Eine Datenleitung 14 verbindet das Sicherheitssteuergerät 10 und das Motorsteuergerät 12. Die Antenne 8 ist mit dem Sicherheitssteuergerät 10 verbunden.

Das Sicherheitssteuergerät 10 und das Motorsteuergerät 12 weisen Speicher 16, 18 auf, in denen mehrere gemeinsam bekannte Verschlüsselungsalgorithmen abgelegt sind, und Verschlüsselungseinrichtungen 20, 22. Das Motorsteuergerät weist einen Zufallsgenerator 24 und einen Vergleicher 26 auf. Das Motorsteuergerät 12 und das Sicherheitssteuergerät 10 sind vorzugsweise unter Verwendung eines Mikroprozessors realisiert, können aber auch als Teil einer vorhandenen Steuerelektronik ausgeführt sein.

Der Betrieb der Wegfahrsperre nach Fig.1 soll nachfolgend anhand der Fig. 2 erläutert werden, die den Normalbetrieb nach erfolgter Erstinbetriebnahme und nachdem das Fahrzeug wenigstens einmal regulär in Betrieb genommen wurde veranschaulicht.

Nach einer Authentisierung bzw. Identifizierung des Fahrers gegenüber dem Sicherheitssteuergerät 10 und nach Übermittlung eines Fahrerstartwunsches, was beispielsweise durch Einführen des Zündschlüssels in das Zündschloss und/oder nach Einschalten der Bordspannung (Schritt 100) erfolgen kann, sendet das Sicherheitssteuergerät 10 ein Anforderungssignal für eine Zufallszahl an das Motorsteuergerät 12 (Schritt 101).

Das Motorsteuergerät 12 generiert über den Zufallsgenerator 24 nach Empfang des Anforderungssignals eine Zufallszahl und sendet diese Zufallszahl über die Datenleitung 14 unverschlüsselt an das Sicherheitssteuergerät 10 (Schritt 102). Das Sicherheitssteuergerät 10 verschlüsselt über die Verschlüsselungseinrichtung 20 die Zufallszahl in Abhängigkeit von der zu übertragenden Information bzw. in Abhängigkeit von dem zu übertragenden Befehl mit einem der im Speicher 16 abgelegten Verschlüsselungsalgorithmen, der der Information bzw. dem Befehl zugeordnet ist. Die Verschlüsselungsalgorithmen sind verschiedenen fahrzeugrelevanten Funktionen des Motorsteuergerätes zugeordnet, beispielsweise einer Kraftstoffversorgung, einem Zündstromkreis, einem Anlasserstromkreis etc.

Die verschlüsselte Zufallszahl wird dann als Antwortzahl an das Motorsteuergerät 12 zurückgesendet (Schritt 103), das die Antwortzahl dem Vergleicher 26 zuführt. Das Motorsteuergerät verschlüsselt seinerseits über die Verschlüsselungseinrichtung 22 die gesendete Zufallszahl mit sämtlichen im Speicher 18 abgespeicherten Verschlüsselungsalgorithmen zur Bildung von Testzahlen und führt die Verschlüsselungsergebnisse bzw. die Testzahlen dem Vergleicher 26 zu, der die Testzahlen mit der verschlüsselten Antwortzahl des Sicherheitssteuergerätes 10 vergleicht (Schritt 104) zur Ermittlung des bei Übereinstimmung von Antwortzahl und Testzahl verwendeten Verschlüsselungsalgorithmus, mit dem das Sicherheitssteuergerät 10 die Zufallszahl verschlüsselt hat. Die Verschlüsselungsalgorithmen sind so gewählt, dass sie stets zu unterschiedlichen Ergebnissen führen, so dass das Motorsteuergerät 12 durch den Vergleich eine eindeutige Entscheidung treffen kann. Sobald eine Übereinstimmung zwischen Antwortzahl und einer Testzahl vorliegt, schaltet das Motorsteuergerät 12 die dem festgestellten Verschlüsselungsalgorithmus zugeordnete fahrzeug-relevante Funktion frei, so dass das Fahrzeug in Betrieb genommen werden kann (Schritt 105). Bei Nichtübereinstimmung bleibt das Motorsteuergerät gesperrt und die entsprechende Funktion wird nicht freigeschaltet (Schritt 106). Das Fahrzeug kann dann nicht benutzt werden.

Die Wegfahrsperre kann so ausgelegt sein, dass nach jedem Freischaltvorgang oder nach einer vorstimmten Zahl von Freischaltvorgängen andere Verschlüsselungsalgorithmen bereitgestellt werden.

Ferner kann die Wegfahrsperre so ausgelegt sein, dass eine Freischaltung einer Funktion nur dann erfolgt, wenn für mehrere verschiedene Antwortzahlen des Sicherheitssteuergerätes 10 eine Übereinstimmung mit mehreren verschiedenen Testzahlen des Motorsteuergerätes 12 festgestellt worden ist.

Alternativ zu der oben beschriebenen Verfahrensweise der Wegfahrsperre kann das Motorsteuergerät auch so ausgelegt sein, dass das Motorsteuergerät die vom Sicherheitssteuergerät empfangene Antwortzahl mit Hilfe sämtlicher Verschlüsselungsalgorithmen entschlüsselt und dann die entschlüsselten Ergebnisse mit der von ihm gesendeten Zufallszahl vergleicht. Bei Übereinstimmung zwischen einem Entschlüsselungsergebnis und der gesendeten Zufallszahl wird analog verfahren wie es oben für den Vergleich von Testzahl und Antwortzahl beschrieben wurde.

Anstelle eines Zündschlüssels mit Transponder kann auch eine Chipkarte mit Transponder verwendet werden.

Auf eine Antenne und einen Transponder kann verzichtet werden bei Verwendung bspw. einer Chipkarte oder bei Verwendung eines Zündschlüssels mit einem EPROM, deren Chip bzw. dessen EPROM elektrisch kontaktiert werden kann zur direkten Übertragung der Kenndaten, so dass die Kenndaten direkt vom Sicherheitssteuergerät ausgelesen werden können.

Nach Übertragung der Kenndaten können diese im Transponder, dem Chip oder dem EPROM gelöscht werden. Die Information ist dann nur noch dem Sicherheitssteuergerät bekannt.

Es ist auch möglich einen Irisscanner oder einen Fingerabdruckscanner einzusetzen und die ermittelten biometrischen Daten in die Motorsteuerung einzulesen und zur Befehlsübertragung zu nutzen.

Für die obige Funktionsbeschreibung ist, wie oben erwähnt, vorausgesetzt, dass das Fahrzeug bereits wenigstens einmal regulär in Betrieb genommen wurde.

Bei einer Erstinbetriebnahme ist gemäß einer vorteilhaften Weiterbildung der Erfindung eine Initialisierung der Wegfahrsperre vorgesehen, die durch folgende Merkmale gekennzeichnet ist: Der Transponder 4 eines beliebigen Zündschlüssels 2 oder die Transponder beliebiger Schlüsselsätze enthalten Mittel zur Aufnahme und Abspeicherung individueller Kenndaten vor Einbau des Zündschlüssels oder der Zündschlüsselsätze zusammen mit dem Zündschloss in ein mit dem Sicherheitssteuergerät und dem Motorsteuergerät versehenes Fahrzeug. Durch die Eingabe der Kenndaten wird der Transponder elektronisch individualisiert. Das Sicherheitssteuergerät 10 weist Mittel auf, die nach Einbau der/des Zündschlüsselsätze/Zündschlüssels mit Zündschloss in das Fahrzeug und bei beabsichtigter Inbetriebnahme des Fahrzeugs, bspw. durch Einschaltung der Zündung, die Kenndaten aus dem Transponder 4 auslesen, bspw. unter Verwendung der Antenne 8, und in einem Speicher ablegen. Die aus dem Transponder ausgelesene Kennung wird zu Individualisierung der Kommunikation zwischen dem Motorsteuerungsgerät und dem Sicherheitssteuergerät eingesetzt. Die Individualisierung zwischen Transponder und Sicherheitssteuergerät wird durch eine im Sicherheitssteuergerät vorhandene Kennung realisiert.

Auch in diesem Fall können, wie oben erläutert, die aus dem Transponder 4 ausgelesenen und in einem Speicher des Sicherheitssteuergerätes 10 abgelegten Kenndaten können nach dem Abspeichern im Transponder gelöscht werden. Die individuellen Kenndaten sind dann nur noch dem Sicherheitssteuergerät 10 bekannt.

Alternativ können die individuellen Kenndaten auch von einem Bandende-Programmiergerät übernommen werden, oder sie können auch vom Sicherheitssteuergerät selbst festgelegt werden, indem es z.B. die Kenndaten selbst auslost.

Der Vorteil der bei der erfindungsgemäßen Wegfahrsperre vorgesehenen Initialisierung bei einer Erstinbetriebnahme besteht darin, dass die Kennung, mit der sich das Sicherheitssteuergerät und das Motorsteuergerät identifizieren, vor Beginn der Montage von Zündschlüssel und Zündschloss nicht bekannt ist. Die Zündschlüssel mit Kennung werden zusammen mit dem Zündschloss geliefert. Aber es ist zu diesem Zeitpunkt unbekannt, in welchem Fahrzeug das Zündschloss eingebaut wird; dadurch kann auf die Individualisierung des Motorsteuergerätes und des Sicherheitssteuergerätes bei der Produktion am Bandende verzichtet werden. Das Risiko, die Kennung auszulesen, bevor der Zündschlüssel eingelernt worden ist, ist recht gering. Es kann darüber hinaus vorgesehen werden, nur Ersatzzündschlüssel mit vorhandener individueller Kennung einzulernen, um so die Sicherheit des Systems zu erhöhen. Blanko-Zündschlüssel für einen Kfz-Hersteller, wie sie bisher im Markt verwendet werden, können in jeder Fachwerkstatt eingelernt werden. Dies wäre bei einem Zündschlüssel mit individueller Kennung nicht möglich. Anstelle eines Zündschlüssels mit Transponder oder anstelle mehrerer Zündschlüsselsätze mit Transpondern kann auch eine Chipkarte mit Transponder eingesetzt werden. Auf eine Antenne kann verzichtet werden bei Verwendung bspw. einer Chipkarte, deren Chip elektronisch kontaktiert werden kann oder bei Verwendung eines Zündschlüssels mit EPROM, der elektrisch kontaktiert werden kann. Hierdurch können die Kenndaten direkt vom Sicherheitssteuergerät ausgelesen werden.

## Patentansprüche

1. Elektronische Wegfahrsperre für Fahrzeuge, mit einem im Fahrzeug angeordneten Sicherheitssteuergerät , einem Motorsteuergerät für fahrzeugrelevante Funktionen, das mit dem Sicherheitssteuergerät über eine Signalleitung verbunden ist, wobei zwischen dem Sicherheitssteuergerät und dem Motorsteuergerät Informationen austauschbar sind und das Motorsteuergerät nur dann betriebsbereit ist, wenn es einen den Benutzer legitimierenden Zugangsberechtigungscode erhalten hat, mit folgenden Merkmalen:
- das Sicherheitssteuergerät (10) und das Motorsteuergerät (12) weisen Speicher (16, 18) auf, in denen jeweils mehrere verschiedene, gemeinsam bekannte Verschlüsselungsalgorithmen abgelegt sind, die verschiedenen fahrzeugrelevanten Funktionen und/oder Befehlen/Informationen zugeordnet sind,
- das Sicherheitssteuergerät (10) sendet nach einer Authentisierung bzw. Identifikation des Fahrers gegenüber dem Sicherheitssteuergerät und nach Übermittlung eines Fahrerstartwunsches ein Anforderungssignal an das Motorsteuergerät (12), welches einen Zufallsgenerator (24) aufweist, der bei Empfang des Anforderungssignals eine Zufallszahl generiert,
- das Motorsteuergerät (12) weist Mittel zur Übertragung der Zufallszahl auf das Sicherheitssteuergerät (10) über die Datenleitung (14) auf,
- das Sicherheitssteuergerät (10) weist eine Verschlüsselungseinrichtung (20) auf, die in Abhängigkeit von der zu übertragenden Information bzw. dem zu übertragenden Befehl aus den Verschlüsselungsalgorithmen einen der Information bzw. dem Befehl zugeordneten vorbestimmbaren Verschlüsselungsalgorithmus auswählt und die zugesandte Zufallszahl mit diesem Verschlüsselungsalgorithmus verschlüsselt, und ferner Mittel, die die verschlüsselte Zufallszahl als verschlüsselte Antwortzahl über die Datenleitung (14) an das Motorsteuergerät (12) zurücksendet, das die Antwortzahl einem Vergleicher (22) zuführt,
- das Motorsteuergerät (12) weist eine Verschlüsselungseinrichtung (22) auf, die die gesendete Zufallszahl mit sämtlichen im Speicher (18) abgespeicherten Verschlüsselungsalgorithmen zur Erzeugung von Testzahlen verschlüsselt und die Testzahlen dem Vergleicher (22) zuführt, der die Testzahlen mit der Antwortzahl des Sicherheitssteuergerätes (10) vergleicht und bei Feststellung einer Übereinstimmung zwischen einer Testzahl und der Antwortzahl den der Antwortzahl und Testzahl zugrundeliegenden Verschlüsselungsalgorithmus und die/den dem Verschlüsselungsalgorithmus zugeordnete/n Information/Befehl ermittelt und ein Übereinstimmungssignal erzeugt und bei Nichtübereinstimmung zwischen Testzahl und Antwortzahl ein Nichtübereinstimmungssignal erzeugt,
- das Motorsteuergerät (12) weist mit dem Vergleicher verbundene Mittel auf, die bei Zufuhr des Übereinstimmungssignales die dem festgestellten Verschlüsselungsalgorithmus zugeordnete Funktion freischaltet.

2. Elektronische Wegfahrsperre nach Anspruch 1, **dadurch gekennzeichnet, dass** das Motorsteuergerät die empfangene Antwortzahl mit Hilfe sämtlicher Verschlüsselungsalgorithmen entschlüsselt und die Entschlüsselungsergebnisse mit der von ihm an das Sicherheitssteuergerät gesendeten Zufallszahl vergleicht und bei Übereinstimmung zwischen einem Entschlüsselungsergebnis und der gesendeten Zufallszahl die dem Verschlüsselungsalgorithmus zugeordnete fahrzeugrelevante Funktion freischaltet.

3. Wegfahrsperre nach Anspruch 1 oder 2, **dadurch gekennzeichnet, dass** nach Durchführung einer Freischaltung oder einer bestimmten Zahl von Freischaltvorgängen neue Verschlüsselungsalgorithmen bereit gestellt werden.

4. Wegfahrsperre nach Anspruch 1 oder 2, **dadurch gekennzeichnet, dass** eine Freischaltung einer Funktion nur dann erfolgt, wenn für mehrere verschiedene Antwortzahlen des Sicherheitssteuergerätes (10) eine Übereinstimmung mit verschiedenen Testzahlen bzw. Entschlüsselungsergebnissen des Motorsteuergerätes (12) festgestellt worden ist.

5. Wegfahrsperre nach Anspruch 1, **gekennzeichnet durch** folgende Merkmale für eine Initialisierung der Wegfahrsperre bei einer Erstinbetriebnahme des Fahrzeugs:
- eine Einrichtung (2, 4) zur Inbetriebnahme des Fahrzeugs enthält Mittel (4) zur Abspeicherung individueller Kenndaten (Freischaltcodes),
- das Sicherheitssteuergerät (10) weist Mittel auf, die bei beabsichtigter Inbetriebnahme des Fahrzeugs die Kenndaten aus der Einrichtung (2, 4) auslesen und in einem Speicher (16) des Sicherheitssteuergerätes ablegen.

6. Wegfahrsperre nach Anspruch 5, **dadurch gekennzeichnet, dass** die Kenndaten nach dem Auslesen und Abspeichern im Sicherheitssteuergerät in der Einrichtung (2, 4) gelöscht werden.

7. Wegfahrsperre nach Anspruch 5 oder 6, **dadurch gekennzeichnet, dass** die Einrichtung durch einen beliebigen Zündschlüssel (2) mit Transponder (4) oder durch beliebige Zündschlüsselsätze mit Transpondern gebildet ist, wobei die Transponder Mittel zur Abspeicherung der individuellen Kenndaten (Freischaltcodes) vor Einbau des Zündschlosses oder der Zündschlüsselsätze zusammen mit dem Zündschloss (6) in einem mit dem Sicherheitssteuergerät (10) und dem Motorsteuergerät (12) ausgestatten Fahrzeug aufweisen und dass das Sicherheitssteuergerät (10) Mittel aufweist, die nach Einbau der/des Zündschlüssel/s (2) mit Zündschloss in das Fahrzeug bei beabsichtigter Inbetriebnahme, bspw. durch Einschaltung der Zündung, die Kenndaten aus dem Transponder (4) auslesen und im Speicher (16) des Sicherheitssteuergerätes ablegen.

8. Wegfahrsperre nach Anspruch 5, **dadurch gekennzeichnet, dass** Ersatzzündschlüssel für den Einlernvorgang mit einer individuellen Kennung versehen werden.

9. Wegfahrsperre nach einem der Ansprüche 5 bis 8, **dadurch gekennzeichnet, dass** die Einrichtung eine Chipkarte mit Transponder oder zum direkten Auslesen eine Chipkarte mit elektronisch kontaktierbarem Chip oder ein Zündschlüssel mit elektronisch kontaktierbarem EPROM ist.

10. Wegfahrsperre nach einem der Ansprüche 5 bis 9, **dadurch gekennzeichnet, dass** die individuellen Kenndaten von einem Bandende-Programmiergerät ausgelesen werden.

11. Wegfahrsperre nach einem der Ansprüche 5 bis 9, **dadurch gekennzeichnet, dass** die individuellen Kenndaten vom Sicherheitssteuergerät durch Selbstauslosung selbst festgelegt werden.

## Claims

1. Electronic immobiliser for motor vehicles, having a security control unit arranged in the vehicle and an engine control unit for vehicle-relevant functions that is connected to the security control unit by way of a signal line, wherein information can be exchanged between the security control device and the engine control device, and the engine control device is operational only when it has received an access authorisation code that identifies the user, having the following features:
- the security control device (10) and the engine control device (12) have memory devices (16, 18) in each of which there is deposited a plurality of different encoding algorithms that are known to both memory devices and are associated with different vehicle-relevant functions and/or commands/information,
- after the driver has been authenticated or identified by the security control device and after the driver's desire to start the vehicle has been transmitted, the security control device (10) transmits a request signal to the engine control unit (12), which comprises a random generator (24) which, on receiving the request signal, generates a random number,
- the engine control device (12) has means for transmitting the random number to the security control device (10) by way of the data line (14),
- the security control device (10) has an encoding device (20) which, in dependence on the information or command to be transmitted, selects from the encoding algorithms a predeterminable encoding algorithm associated with the information or command and encodes the transmitted random number with that encoding algorithm, and also has means that return the encoded random number as an encoded response number by way of the data line (14) to the engine control device (12), which feeds the response number to a comparator (22),
- the engine control device (12) has an encoding device (22) which encodes the transmitted random number with all the encoding algorithms stored in the memory device (18) in order to produce test numbers and feeds the test numbers to the comparator (22), which compares the test numbers with the response number from the security control device (10) and, if a test number and the response number are found to match, determines the encoding algorithm underlying the response number and the test number and the information/command associated with the encoding algorithm and generates a match signal, and if the test number and the response number do not match, generates a non-match signal,
- the engine control device (12) has means connected to the comparator which, when the match signal is supplied, activates the function associated with the determined encoding algorithm.

2. Electronic immobiliser according to claim 1, **characterised in that** the engine control device decodes the received response number by means of all the encoding algorithms and compares the results of the decoding with the random number transmitted by it to the security control device and, if the decoding result and the transmitted random number match, it activates the vehicle-relevant function associated with the encoding algorithm.

3. Immobiliser according to claim 1 or 2, **characterised in that**, after an activation or a specified number of activation procedures have been carried out, new encoding algorithms are provided.

4. Immobiliser according to claim 1 or 2, **characterised in that** activation of a function takes place only when several different response numbers from the security control device (10) have been found to match different test numbers or decoding results of the engine control device (12).

5. Immobiliser according to claim 1, **characterised by** the following features for initialisation of the immobiliser on initial start-up of the vehicle:
- a device (2, 4) for starting the vehicle comprises means (4) for storing individual characteristic data (activation codes),
- the security control device (10) has means which, when the vehicle is to be started, read out the characteristic data from the device (2, 4) and store them in a memory device (16) of the security control device.

6. Immobiliser according to claim 5, **characterised in that**, after the characteristic data have been read out and stored in the security control device, they are erased from the device (2, 4).

7. Immobiliser according to claim 5 or 6, **characterised in that** the device is formed by any ignition key (2) having a transponder (4) or by any sets of ignition keys having transponders, the transponders having means for storing the individual characteristic data (activation codes) before the ignition lock or the sets of ignition keys together with the ignition lock (6) are fitted in a vehicle equipped with the security control device (10) and the engine control device (12), and **in that** the security control device (10) has means which, after fitting of the ignition key(s) (2) with ignition lock in the vehicle, read out the characteristic data from the transponder (4) when the vehicle is to be started, for example by switching on the ignition, and store them in the memory device (16) of the security control device.

8. Immobiliser according to claim 5, **characterised in that** spare ignition keys with an individual identification are provided for the commissioning procedure.

9. Immobiliser according to any one of claims 5 to 8, **characterised in that** the device is a chip card with a transponder or, for direct reading out, a chip card having a chip with which contact can be made electronically or an ignition key having an EPROM with which contact can be made electronically.

10. Immobiliser according to any one of claims 5 to 9, **characterised in that** the individual characteristic data are read out by a band-end programming device.

11. Immobiliser according to any one of claims 5 to 9, **characterised in that** the security control device picks the individual characteristic data itself automatically.

## Revendications

1. Dispositif antivol électronique pour véhicules, comportant un dispositif de commande de sécurité disposé dans le véhicule, un dispositif de commande de moteur pour les fonctions propres du véhicule, qui est relié au dispositif de commande de sécurité par l'intermédiaire d'une ligne signal, dans lequel des informations peuvent être échangées entre le dispositif de commande de sécurité et le dispositif de commande de moteur et le dispositif de commande de moteur ne peut fonctionner que lorsqu'il a obtenu un code d'autorisation d'accès légitimant l'utilisateur, comportant les caractéristiques suivantes .
- le dispositif de commande de sécurité (10) et le dispositif de commande de moteur (12) possèdent des mémoires (16, 18), dans lesquelles plusieurs algorithmes de cryptage différents connus sont extraits respectivement, qui sont associés aux fonctions et/ou instructions/informations différents propres au véhicule,
- le dispositif de commande de sécurité (10) envoie, après l'authentification ou l'identification du conducteur vis-à-vis du dispositif de commande de sécurité et après transmission du désir de démarrage de la part du conducteur, un signal de demande au dispositif de commande de moteur (12), qui présente un générateur d'accès (24) qui génère un nombre aléatoire à la réception du signal de demande,
- le dispositif de commande de moteur (12) présente des moyens de transmission du nombre aléatoire au dispositif de commande de sécurité (10) par l'intermédiaire d'une ligne de données (14),
- le dispositif de commande de sécurité (10) présente un dispositif de cryptage (20) qui sélectionne un algorithme de cryptage prédéterminé associé à l'information ou à l'instruction indépendamment de l'information à transmettre ou de l'ordre à transmettre à partir de l'algorithme de cryptage et crypte le nombre aléatoire envoyé avec cet algorithme de cryptage, et en outre un moyen, qui renvoie le nombre aléatoire en tant que nombre de réponse codé par l'intermédiaire de la ligne de données (14) au dispositif de commande de moteur (12), qui délivre le nombre de réponse à un comparateur (22),
- le dispositif de commande de moteur (12) présente un dispositif de cryptage (22), qui crypte le nombre aléatoire envoyé avec tous les algorithmes de cryptage mémorisés dans la mémoire (18) pour la génération de nombres test et délivre les nombres tests au comparateur (22), qui compare les nombres tests au nombre de réponse du dispositif de commande de sécurité (10) et, lors de la constatation d'une correspondance entre le nombre test et le nombre de réponse, détecte l'algorithme de cryptage servant de base au nombre de réponse et au nombre test et génère l'information/ instruction associée à l'algorithme de cryptage et génère un signal de correspondance et lors d'une non correspondance entre le nombre test et le nombre de réponse génère un signal de non correspondance,
- le dispositif de commande de moteur (12) présente un moyen relié au comparateur, qui déconnecte la fonction associée à l'algorithme de cryptage déterminé lors de la délivrance d'un signal de concordance.

2. Dispositif antivol électronique selon la revendication 1, **caractérisé en ce que** le dispositif de commande de moteur décrypte le nombre de réponse reçu à l'aide de tous les algorithmes de cryptage et compare les résultats de décryptage au nombre aléatoire qu'il a envoyé au dispositif de commande de sécurité et, lors d'une concordance entre un résultat de décryptage et le nombre aléatoire envoyé, déconnecte la fonction propre au véhicule associée à l'algorithme de cryptage.

3. Dispositif antivol selon la revendication 1 ou 2, **caractérisé en ce que** de nouveaux algorithmes de cryptage sont disponibles après l'exécution d'une déconnexion ou après un nombre déterminé de processus de déconnexion.

4. Dispositif antivol selon la revendication 1 ou 2, **caractérisé en ce qu'**une déconnexion d'une fonction ne se produit que lorsqu'une concordance avec différents nombres tests ou résultats de décryptage du dispositif de commande de moteur (12) a été constatée pour plusieurs nombres de réponse différents du dispositif de commande de sécurité (10).

5. Dispositif antivol selon la revendication 1, **caractérisé par** les caractéristiques suivantes pour une initialisation du dispositif antivol lors de la première mise en service du véhicule :
- un dispositif (2, 4) pour la mise en service du véhicule contient un moyen (4) pour la mémorisation de données d'identification individuelles (code de déconnexion),
- le dispositif de commande de sécurité (10) présente des moyens, qui, lors d'une mise en service intentionnelle du véhicule, extraient les données d'identification du dispositif (2, 4) et les mémorise dans une mémoire (16) du dispositif de commande de sécurité.

6. Dispositif antivol selon la revendication 5, **caractérisé en ce que** les données d'identification sont effacées dans le dispositif (2, 4) après l'extraction et la mémorisation dans le dispositif de commande de sécurité.

7. Dispositif antivol selon la revendication 5 ou 6, **caractérisé en ce** le dispositif est formé par une clé de contact quelconque (2) comportant des transpondeurs (4) ou par des jeux de clé de contact comportant des transpondeurs, dans lequel les transpondeurs présentent des moyens pour la mémorisation des données d'identification individuelles (codes de déconnexion) avant l'insertion de la serrure de contact ou des jeux de clé de contact conjointement avec la serrure de contact (6) dans un véhicule équipé d'un dispositif de commande de sécurité (10) et d'un dispositif de commande de moteur (12) et en ce que le dispositif de commande de sécurité (10) présente des moyens, qui extraient les données d'identification du transpondeur (4) après l'insertion de la clé de contact ou des clés de contact (2) avec la serrure de contact dans le véhicule, lors d'une mise en service intentionnelle, par exemple lors de l'activation de l'allumage, et les mémorisent dans la mémoire (16) du dispositif de commande de sécurité.

8. Dispositif antivol selon la revendication 5, **caractérisé en ce que** les clés de contact supplémentaires sont prévues avec une identification individuelle pour le processus d'apprentissage.

9. Dispositif antivol selon l'une des revendications 5 à 8, **caractérisé en ce que** le dispositif est une carte à puce avec un transpondeur ou une carte à puce avec une puce par contact électronique pour une extraction directe ou une clé de contact avec une EPROM à contact électronique.

10. Dispositif antivol selon l'une des revendications 5 à 9, **caractérisé en ce que** les données d'identification individuelles sont extraites par un programmateur fin de bande.

11. Dispositif antivol selon l'une des revendications 5 à 9, **caractérisé en ce que** les données d'identification individuelles sont définies par le dispositif de commande de sécurité par déclenchement automatique.
